# EUROPEAN PATENT SPECIFICATION

(11) **EP 1 228 408 B1**
(45) Date of publication and mention of the grant of the patent: **31.03.2010**
(21) Application number: 00965853.5
(22) Date of filing: 04.10.2000
(51) Int. Cl.: G06F 1/00

(54) **COMPUTER SYSTEM COMPRISING A COOLING SYSTEM AND A COOLING SYSTEM FOR A COMPUTER SYSTEM**
RECHNERSYSTEM, DAS EIN KÜHLSYSTEM BEINHALTET UND KÜHLSYSTEM FÜR EIN RECHNERSYSTEM
SYSTEME INFORMATIQUE COMPRENANT UN SYSTEME DE REFROIDISSEMENT ET SYSTEME DE REFROIDISSEMENT POUR SYSTEME INFORMATIQUE

(30) Priority: 04.10.1999 DK 141699; 04.10.1999 US 157111 P
(43) Date of publication of application: 07.08.2002
(73) Proprietor: Asetek A/S, 9700 Bronderslev (DK)
(72) Inventor: ERIKSEN, André, Sloth, DK-9000 Aalborg (DK); ADAMSEN, Per, DK-9000 Aalborg (DK)
(74) Representative: Plougmann & Vingtoft A/S
(86) International application number: PCT/DK2000/000554
(87) International publication number: WO 2001/025881

(56) References cited:
- EP-A- 0 489 326
- US-A- 5 549 155
- US-A- 5 574 627

## Description

### BACKGROUND OF THE INVENTION

The present invention relates to a computer system comprising at least a processing unit such as a central processing unit (CPU) generating thermal energy when processing and said computer system also comprising a cooling system with a heat exchanger being in thermal contact with the CPU and comprising a compressor for compressing cooling refrigerant from a vaporised state to a liquid state and comprising first pipes transporting the cooling refrigerant from the compressor to the heat exchanger and second pipes leading the cooling refrigerant from the heat exchanger back to the compressor and said computer system further comprising a regulating means for at least starting and stopping the compressor.

It is known to cool the processor of a computer system in order to increase the operating frequency of the processor to a value above the value intended or expected by the producer of the processor. Whenever a processing unit of a computer system is processing, heat is generated. This reduces the working capacity of the unit, and therefore it is desirable to cool the processing unit by means of a cooling system in order to increase the processing frequency of the processor.

### DESCRIPTION OF THE PRIOR ART

US 5.574.627 describes such a cooling system. The system comprises a heat exchanger being in contact with a central processing unit. The CPU is attached to a so-called motherboard. A refrigeration compressor unit such as the one used in a conventional refrigerator provides the cooling. Similar cooling unit is further described at homepage www.kryotech.com from the company Kryotech, Inc. around the CPU and around the heat exchanger, insulation is provided. The insulation ensures that any dew that may be generated on the cool surface of the heat exchanger or on the cooled down surface of the processor is avoided. However, if dew never the less should generate on the insulation, resistive ink is provided at the outer surface of the insulation in order to heat the insulation if necessary.

This cooling system described in this patent and also the system described at the web-site www.kryotech.com have some disadvantages. Firstly, the compressor used is very bulky compared to the rest of the components of the computer system which all should be as small as possible for fulfilling the demands of small sized computers. The compressor is a conventional compressor using high voltage power supply such as 220/230 V or 110/115 V. This creates the need for extra electrical insulation and other measures for maintaining a sufficient electrical security. Also, the heat generated by the compressor will to a certain extend be conducted up through the computer itself and past the components of the computer system thereby increasing the internal temperature of the casing of the compressor.

US 5.488.279 describes using a low-voltage compressor to be used in an electrical refrigerator working at locations away from an access to the public electrical network such as off a battery incorporated in an automobile. Thus, using a low-voltage compressor in a refrigerator in an automobile is due to the necessity of using a compressor, which is capable of running on electrical power having a voltage level corresponding to the voltage level that an automobile can provide. There is no discussion of the possible advantages of using a low voltage compressor in stead of using a high voltage compressor, namely because using a low voltage compressor is a necessity and not an option when using it in an electrical refrigerator in an automobile.

US 6.054.676 describes an apparatus for cooling an integrated circuit. The cooling unit comprises casings enclosing a base plate that the integrated circuit is mounted to. Inside the casing a cold plate is provided. The cold plate is situated, together with the integrated circuit, within the casing, and the casing provides insulation around the cold plate. The apparatus also comprises a heating foil being provided with holes along the periphery of the foil. Leggings extending from the base plate extend through the holes in the heating foil. The cooling of the integrated circuit and the heat exchanger is dependant on the insulating capacity of the casing, and the thermal contact between the cold plate and the integrated circuit is limited because there is no means for establishing a close physical contact between the cold plate and the integrated circuit.

EP 0 489 326 discloses an electronic computer cooling system having a cooling apparatus to cool an electronic computer and cooling members for thermally connecting semiconductor devices whose operating speeds are raised by cooling to a low temperature source of the cooling apparatus. Circuit boards onto which the semiconductor devices and the like constructing the electronic computer are mounted and the cooling apparatus such as a refrigerating apparatus and the like are compactly enclosed in a single casing. Or, the circuit boards and the cooling apparatus are compactly enclosed in separate detachable casings, respectively. A compressor is mentioned, but voltage requirement of the compressor is not mentioned. Temperatures down to -100°C or below of the semiconductor devices and an increase in operating speed of 2.4 are mentioned.

It is an object of the present invention to provide a computer system with a cooling system where the flexibility of using the cooling system is greater than for known systems and where the risk of electrical damage or lack of electrical security is reduced so that the overall functionality of the computer system is increased. It is also a purpose to provide means for an efficient cooling of electronic components within the computer system.

Specifically, the object of the invention is to maximize over-clocking limitation of one or more processing units of the computer system such as a central processing unit (CPU) generating thermal energy when processing, by increasing cooling performance, however, at the same time preventing condensation and at the same time limiting size, noise and power consumption of the cooling system when incorporated into the computer system.

The objects of the invention are obtained by a computer system where the compressor is a low voltage compressor with a voltages in the range from 6V to 48V, more preferably voltages in the range from 6V to 12V, most preferably voltages of 12 V, and where the computer system is provided with means for regulating the cooling capacity of the compressor in response to the need for cooling, and where the computer system comprises an insulation material being provided between heat exchanger and the ambient environment and also being provided between the CPU and the ambient environment.

Using the public net is obvious because the computer system itself always has the need for electrical power from the public net, so there is no reason why the compressor should not also have electrical power from the public net. However, by using a low voltage compressor certain surprising advantages are obtained compared to using conventional high voltage compressors adapted for using the voltage supply of the public electrical distribution net, although special supplementary features are needed in the computer system, which may cause disadvantages which do not occur when using high voltage compressors. However, the advantages obtained when using low voltage compressor may justify the disadvantages involved.

A first advantage of using a low voltage compressor is that it is possible to power the compressor from the electrical power supply of the computer system itself, thereby eliminating the need for a supplementary power supply. It also means that using the computer with different networks as example 220/230 V or 110/115 V is indifferent to the compressor because the power is supplied from the power supply of the computer system. Any switch between as example 220 V and 110 V will just have to be made for the components of the computer, and the compressor neither needs to be suited for the actual voltage of the electrical distribution network nor needs to have a switch of its own for switching between different voltages of networks around the world.

A second advantage of using a low voltage compressor is that it is very easy to incorporate means for regulating the capacity of the compressor. This makes it possible to individually graduate the degree of lowering the temperature and also makes it possible to adjust the capacity in response to the need for cooling. As example, when the computer system is in a standby mode or in any other way is not performing greater processing, then the need for cooling is limited as compared to situations when the processor is performing actual processing. The means for regulating the capacity of the compressor may be controlled by additional software incorporated in the computer system. The means for regulation may also be more conventional regulating means or a combination of these and software controlling.

A third advantage is that the size of a low voltage compressor may be smaller than the size of a conventional high voltage compressor. This means that the space needed for the cooling system is limited and advantageously the cooling system may be incorporated into the standard cabinet of the computer system. Also, the power consumption of a low voltage compressor is lower than that of conventional high voltage compressors, as example 50W compared to 120W. Apart from reducing the overall power consumption of the computer system, the reduced power consumption may also limit the size of certain electrical components in the compressor.

Also, it is possible to incorporate the compressor into the top of the cabinet because not only the size but also the weight of the low voltage compressor may be smaller than for conventional compressors. Accordingly, there will neither be any space problem nor any stability problem of placing the compressor in the top of the cabinet. Placing the compressor in the top of the cabinet means that the heat generated when the compressor is working is not passed through the computer itself and is not passed through the components of the computer system.

In a preferred embodiment the computer system, wherein the CPU and the heat exchanger are enclosed in a box, comprises an insulation material being provided between at least the heat exchanger and the inside of the box and also being provided between the CPU and the inside of the box.

The advantages of enclosing the heat exchanger and the processor in insulation are already known. However, also enclosing the insulation in a box has the advantage that the processor and the insulation are capsuled and constitute a unit of its own. Enclosing the heat exchanger and the processor together with the insulation in a box means that it is actually possible to market and sell these components as an integrated unit.

As example, if a computer already having a cooling system has to be upgraded, then it is necessary to substitute the processor. Substituting the processor may involve also substituting the heat exchanger to one with a larger cooling capacity. This can easily be done if the processor, the heat exchanger and the insulation are enclosed in a box constituting a unit. Thereby it is not necessary to dismantle the insulation and the heat exchanger, substituting the processor and afterwards assemble the heat exchanger and the insulation again.

If the box is black and perhaps is also lustreless, then the outside of the box will have the best opportunity to receive heat from the surroundings, and thereby keeping as high a temperature as possible of the box. This avoids the formation of dew on the box. The box may as a supplement be provided with a heating element in thermal contact with the outer or inner surface of the box for heating the box to further avoid the formation of dew.

However, in other situations it may only be necessary to substitute the processor, but not absolutely necessary to substitute the heat exchanger. Also in this situation it is convenient to have the processor, the heat exchanger and the insulation all enclosed in a box. It will be possible to dismantle the insulation and the heat exchanger outside of the computer system and thereafter substituting the processor and assemble the insulation and the heat exchanger again also outside the computer and finally placing the box in the computer.

Thus the overall flexibility of the computer system according to the invention is highly increased by the combination of the above mentioned features. This is important in especially this field of business, where the technical development is extremely fast and therefore fosters the need of a possibility to substitute one or more components with new components, but also a need for a uniform product that may be used all around the world because most computer systems are universal. Thus using a low voltage compressor makes the computer system according to the invention universal, while using components that are not physically bonded together and which are enclosed in a box constituting a unit at the same time increases the flexibility by facilitating easy substitution of the components.

### BRIEF DESCRIPTION OF THE INVENTION

The invention will now be described in detail with reference to the accompanying drawing, where
fig. 1 shows an embodiment of a computer system with a cooling system according to the invention with a cooling unit enclosed in a box that is mounted in the computer system,
fig. 2 shows a cooling system mounted in the top of a computer cabinet and comprising a compressor and an external heat exchanger,
fig. 3 shows the box with the embodiment of the invention enclosed and provided with a heating element around the exterior of the box,
fig. 4 shows different components of the box enclosing part of the cooling system according to the invention
fig. 5 - fig. 13 show different steps in assembling the components inside the box and in assembling the box itself,
fig. 14 shows an alternative embodiment of the invention enclosed in a box that is alternatively mounted in a computer system,
fig. 14a shows a cross section of an embodiment of a heat exchanger to be used in the alternatively mounted box, and

### DETAILED DESCRIPTION OF THE INVENTION

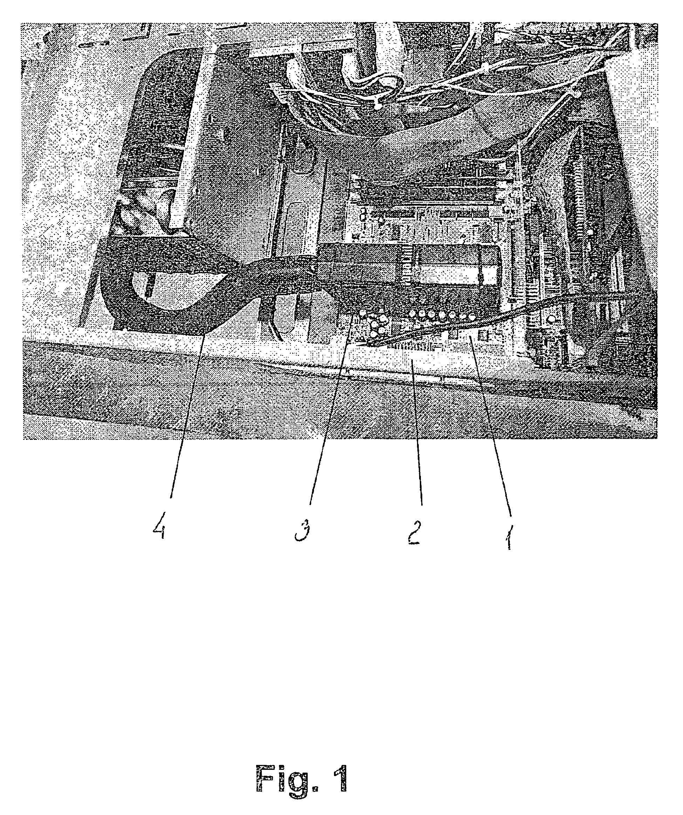

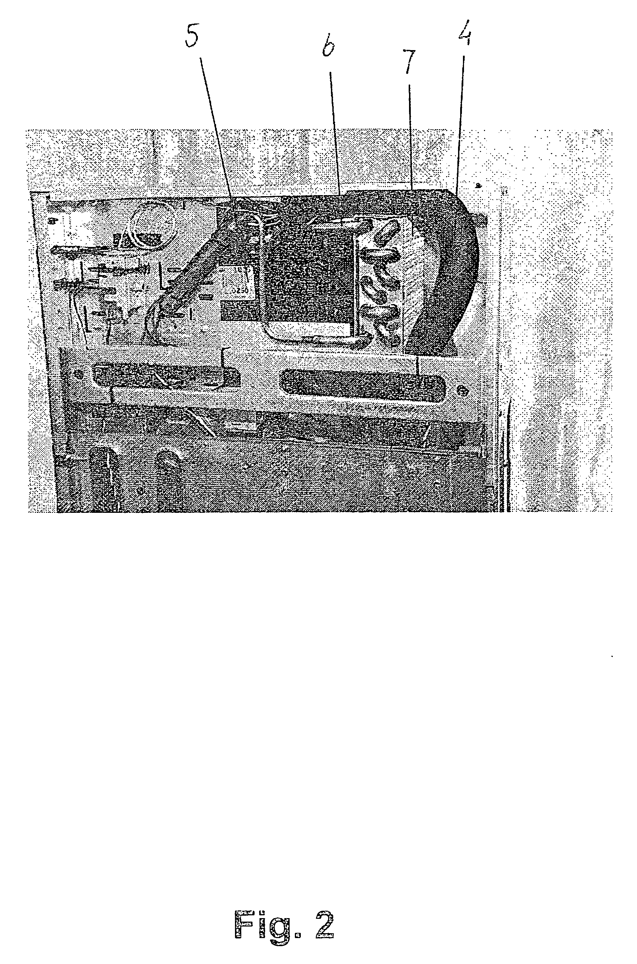

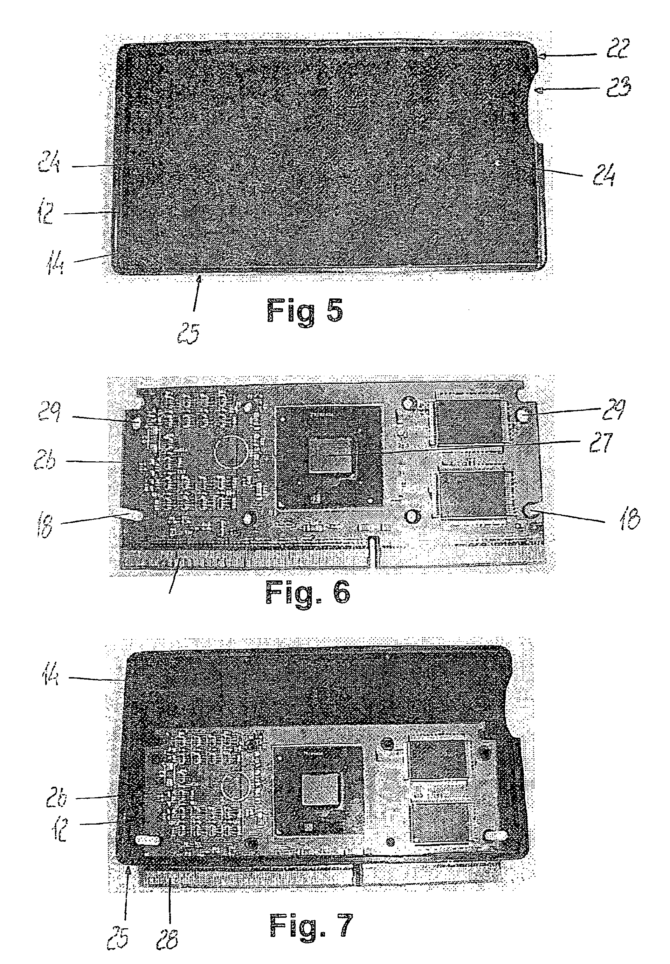

Fig. 1 is a photograph showing a motherboard 1 inside a computer cabinet 2. At the motherboard 1 a black box 3 is shown. The box 3 encloses the central processing unit (CPU) (not shown) of the computer system. Apart from enclosing the CPU, the box also encloses a cooling unit comprising a heat exchanger (not shown) being in thermal contact with the CPU. The box is kept in place by means of the connection pins from the printed circuit board at which the CPU is placed (see fig. 6), said connection pins being inserted in the appropriate slots in the motherboard. A hose 4 extends from the box 3 to a compressor (see fig. 2). The hose 4 contains metal piping for conducting coolant liquid from the compressor to the heat exchanger in the box and for returning the vaporised coolant from the heat exchanger in the box to the compressor.

Fig. 2 is a photograph showing the part of the cooling system being outside the box (see fig. 1), i.e. all of the cooling system, except the parts inside the box including the heat exchanger being in thermal contact with the CPU. The cooling system comprises a compressor 5. The compressor 5 is a special low voltage compressor, preferably a 12V compressor. A metal piping (not shown) is leading through the hose 4 from the compressor 5 to the heat exchanger in the box (see fig. 1), and an other metal piping 6 is leading back to the compressor 5. Before being led to the heat exchanger being in thermal contact with the CPU, the vaporised coolant is led past an exterior condenser 7 for liquefying the coolant.

The cooling system is placed inside the standard cabinet 2 of a computer system, and is placed in the top of the cabinet. This way it is assured that the heat from the compressor 5 when in duty and the heat from the exterior heat exchanger 7 shown is not led past any of the other components in the computer system causing these to be further heated. The duty periods of the compressor are regulated in accordance with the demand for cooling. The regulation may be either an on/off switching of the compressor, or may be a stepwise or may even be an infinitely adjusting of the rotational speed of the compressor. Regulation of the rotational speed may be controlled by software programs installed in the computer system. Alternatively the regulation of the rotational speed may be controlled by hardware.

In the embodiment of the cooling system as shown in fig. 1 and fig. 2, the compressor and the condenser is mounted on a frame. The frame has dimensions being the same as or smaller than inner dimensions of the computer cabinet. Preferably the frame and the compressor and condenser has a width being not larger than 5 1/4" (five and a quarter of an inch) or alternatively a width being not larger than 3 1/2" (three and a half of an inch). Thereby it is possible to use one or more of the external so-called drive bay shafts, which are already fitted at the front side of the computer cabinet and which are externally accessible. Thereby, it is not necessary to dismount the entire cabinet of the computer cabinet in order to install or remove the cooling system from the interior of the computer cabinet. The rails that may be mounted inside the computer cabinet for supporting a disc drive or other hardware facilities of the computer may in stead be used to support the frame of the compressor and the condenser.

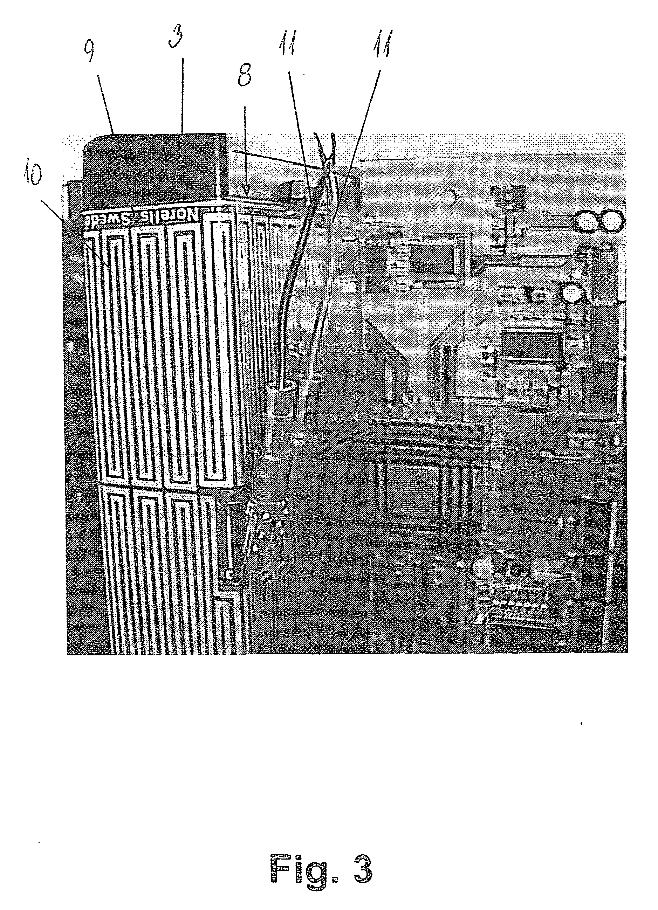

Fig. 3 is a photograph showing the box 3 provided with a heating element 8 around the outer surface of the box. The heating element 8 consists of a foil 9 provided with metallic wires 10 attached to the foil. Electric wires 11 lead to the heating element 8 for providing electrical power to the wires 10 on the foil 9 in order to heat the outer surface of the box 3. By heating the outer surface of the box the risk of dew forming on the outer surface is avoided. Dew may occur because of the cold heat exchanger inside the box although insulation is provided between the heat exchanger and the casing of the box.

Apart from being provided with a heating element 8 the box is preferably black and provided with a lustreless surface. Both of these features further minimises the risk of dew occurring because the casing of the box, when being black and lustreless, receives as much heat in the form of radiation heat both from the heating element wrapped around the outer surface of the box but also from the surroundings. Alternatively, the box may have other appearances in relation to colour and surface if the problem of dew occurring is not that great a problem. As example, if it is a greater problem that heat from the surroundings limits the capacity of the heating element inside the box because of heat penetrating through the box and through the insulation, it will be more favourable to have a white box with a shiny surface in order to reject as much of the heating radiating from the surroundings inside the computer system.

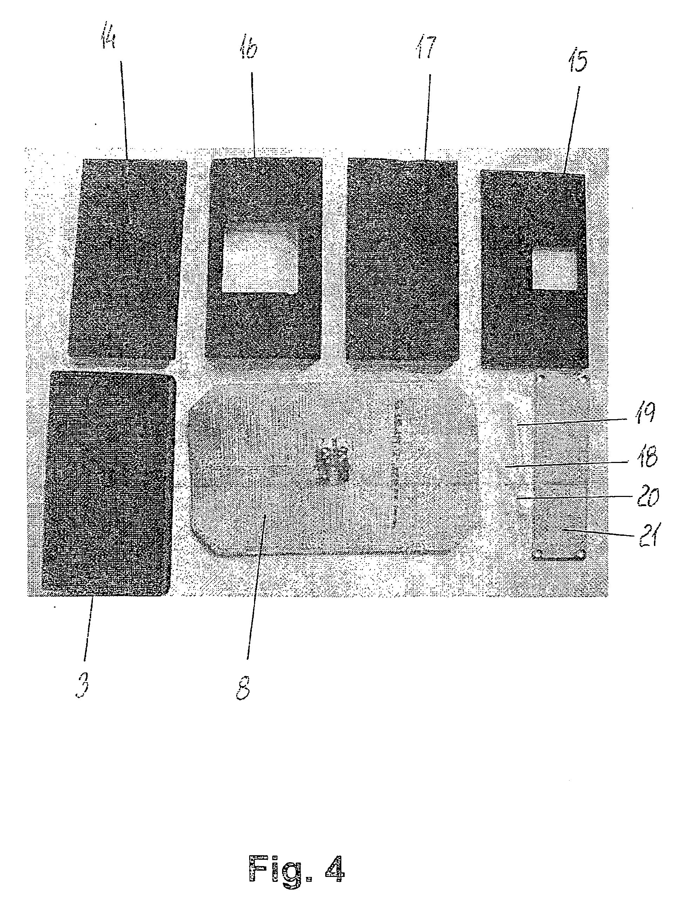

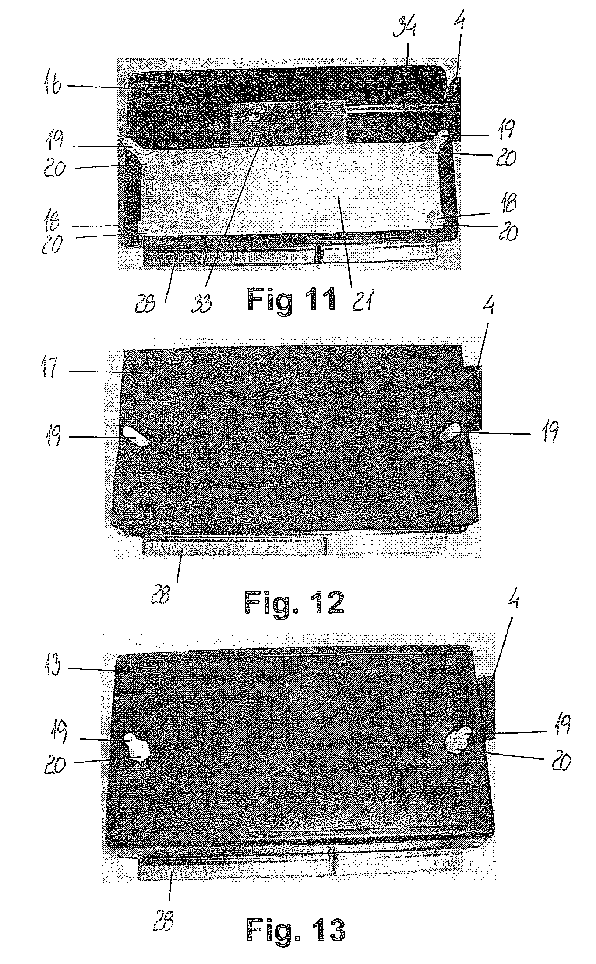

Fig. 4 is a photograph showing the different components of a cooling unit in a box shown in fig. 1 and fig. 3. The box 3 consists of a casing consisting of two halves 12,13 (see fig. 5 and fig. 13) and of insulation 14-17 for being placed inside the casing and for surrounding the CPU and the heat exchanger thereby forming a thermal barrier between these components and the casing of the box. Furthermore the box comprises bolts 18,19 and nuts 20 for holding together of the two parts which constitutes the casing (see the subsequent figures). The box also comprises a plate 21 for holding the heat exchanger in a firm physical and thereby firm thermal contact with the CPU. Lastly, as an option, the box comprises the heating element 8 in the form of the foil with wires (see fig. 3) for wrapping around the outer surface of the casing.

Fig. 5 - fig. 13 are photographs showing assembling of the box and of the CPU and the heat exchanger inside the box. Fig. 5 shows a first half part 12 of the casing into which a first layer 14 of insulation is placed. In the right side upper side 22 of the casing an opening 23 is provided for insertion of the tube 4 and the piping into the box 3. The part 12 of the casing and the insulation 14 are provided with holes 24 for accommodating the insertion of the bolts 19 through the insulation 14 and through the box 3. In the bottom 25 of the casing a slot (not shown) is provided through which the connecting pins of the print circuit board can be introduced (see fig. 7).

Fig. 6 shows a print circuit board 26 on which a central processing unit (CPU) 27 is placed. Also other electrical components are placed on the board 26. The board 26 is provided with connection pins 28 along the lower edge of the board. The pins 28 are intended for insertion into corresponding slots in the motherboard (see fig. 1) of the computer system. Bolts 18 are attached to the print circuit board 26. The bolts 18 are for fastening of the plate 21 for keeping the heat exchanger in place in relation to the insulation and the casing of the box (see fig. 11). The board 26 is also provided with holes 29 for accommodating the insertion of the bolts 19 through the board.

Fig. 7 shows the print board circuit 26 as shown in fig. 6 placed in the half part 12 of the casing as shown in fig. 5. The connecting pins 28 on the print circuit board 26 are inserted though the slot (not shown) in lower part 25 of the part 12 of the casing so that the pins 28 extrude outside of the casing. Thereby the box may be fixed to the motherboard of the computer system by just inserting the connecting pins of the print circuit board in the corresponding slots in the motherboard (see fig. 1).

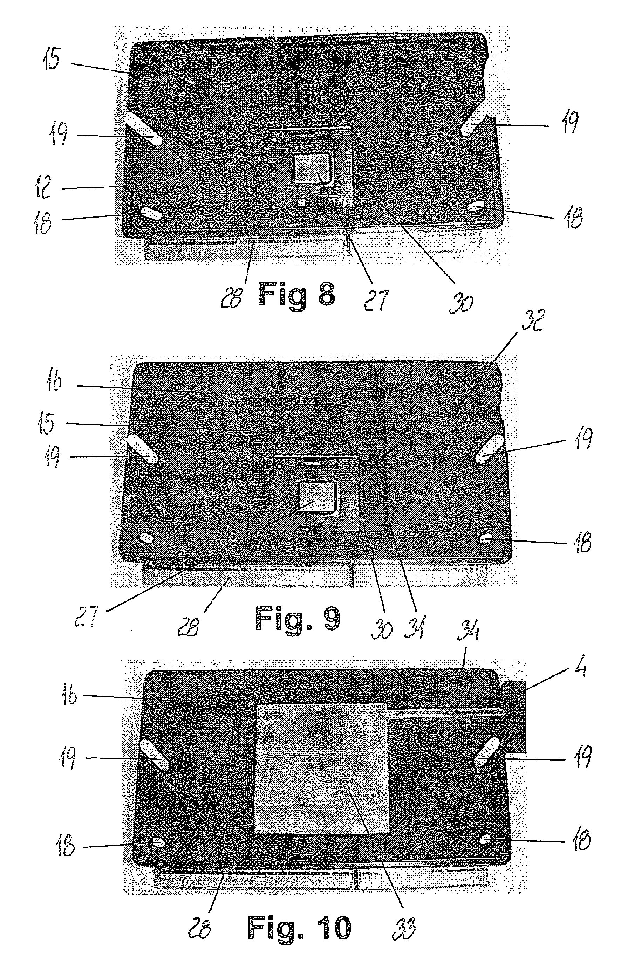

Fig. 8 shows a first intermediate layer 15 of insulation placed on top of the print circuit board 26 (see fig.7). A rectangular opening 30 is made in the first intermediate layer 15 of insulation so that the CPU 28 is still exposed. The first intermediate layer 15 of insulation is provided with four holes (not shown) in the sides of the insulation through which the guiding bolts 18 and the bolts 19 for assembling the casing are extending.

Fig. 9 shows a second intermediate layer 16 of insulation placed above the first intermediate layer 15 shown in fig. 8. The second intermediate layer 16 is provided with a rectangular opening 31 that is bigger than the opening 30 in the first intermediate layer 15 and intended for receiving the heat exchanger (see fig. 10). The second intermediate layer 16 is provided with a groove 32 extending from the opening 31 to the one side of the layer. The groove 32 is intended for receiving piping (see fig. 10) leading to and from the heat exchanger (see fig. 10). Also, the second intermediate layer 16 of insulation is provided with four holes (not shown) in the sides of the insulation through which the fastening bolts 18 and the assembling bolts 19 for assembling the casing are extending.

Fig. 10 shows a heat exchanger 33 placed in the insulation in the casing. The heat exchanger 33 consists of a square block inside which canals (not shown) are made for the coolant to flow through the heat exchanger. The heat exchanger 33 is accommodated in the opening 31 of the second intermediate layer 16 of insulation (see fig. 9). Piping 34 leads the coolant to and from the heat exchanger 33. The piping 34 consists of an outer pipe with a larger diameter and an inner pipe with a smaller diameter. The inner pipe extends co-axially and inside the outer pipe. The tube 4 surrounding the piping 34 is shown outside the casing. The tube 4 is insulated so that the piping 34 leading between the heat exchanger 33 and the compressor 5 (see fig. 2) is thermally insulated from the surroundings.

Fig. 11 shows the plate 21 for keeping the heat exchanger 33 in place. The plate 21 is provided with holes (not shown) through which the fastening bolts 18 and assembling bolts 19 are extending. Nuts 20 are screwed onto the bolts 18,19 so that the plate 21 is kept in place against the heat exchanger 33 thereby assuring sufficient physical and thermal contact between the heat exchanger 33 and the CPU 27. Both the fastening bolts 18 and the assembling bolts 19 and the nuts 20 are made of plastic having a poor thermal conductivity. Thereby the bolts 18,19 and the nuts 20 will not be responsible of thermal transportation of energy either heat from the surroundings to the metal plate 21 and further on to the heat exchanger 33 or cold from the heat exchanger 33 and further on to the metal plate 21 and to the surroundings.

Fig. 12 shows a final layer 17 of insulation placed above the already mounted components in the box. The final layer is provided with two holes (not shown) through which the assembling bolts 19 extend.

Fig. 13 shows a second half part 13 of the casing of the box placed above all of the components inside the box and thereby enclosing these components in the box. The second half 13 of the casing is provided with two holes (not shown) through which the assembling bolts 19 extend. Nuts 20 are screwed onto the bolts 19 for assembling the two halves 12,13 of the box. The box is now closed. The piping (not shown) extend out through the hole 23 (see fig. 5) in the upper right side of the box and is being provided with the tube 4 around it. The connecting pins 28 of the print circuit board 26 (see fig. 6) extend through the slot (not shown) in the bottom of the box.

In the embodiment shown of the computer system according to the invention different alterations may be induced without departing from the scope of protection. As mentioned, it will be possible to exclude using the heating element wrapped around the box as shown in fig. 3. It will also be possible to use low voltage compressors with other voltage needs than 12V, as example 6V, 24V or 48V. Also, in stead of using electrical power from the built in power supply of the computer system it will be possible to provide a separate low voltage power supply for the compressor parallel to the built in power supply. Regulation of the rotational speed of the compressor may be adjusted between a simple on/off switching of the compressor to a constant 24-hour rotation of the compressor and regulating the rotational speed according to the demand for cooling.

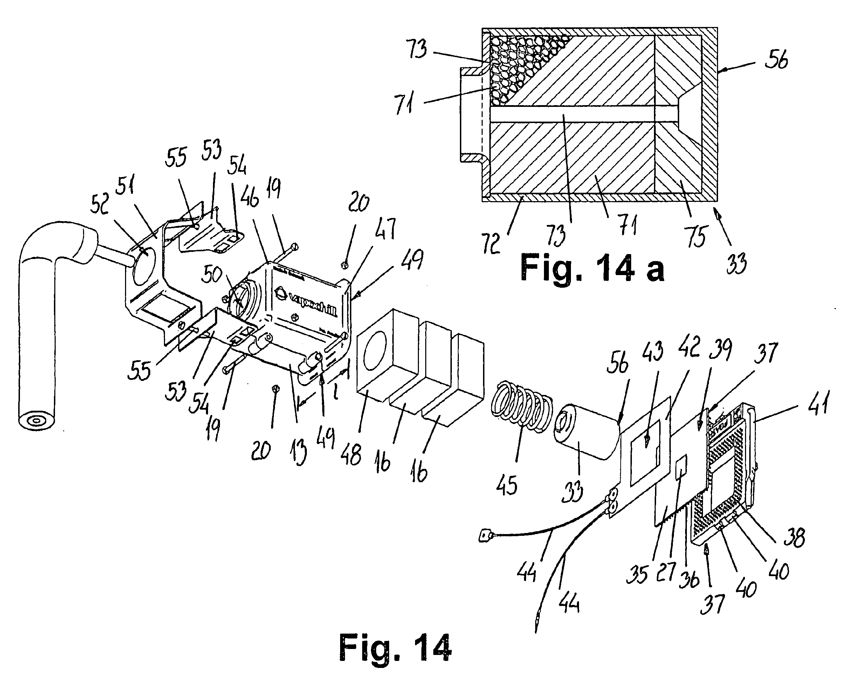

Fig. 14 is an exploded view of an alternative embodiment of a cooling unit for a computer system. As is the case with the before-mentioned cooling unit, the alternative embodiment also comprises a box 13, a heat exchanger 33, and insulation 16 provided around the heat exchanger. Also, the box is constituted of two parts being held together by appropriate fastening means such as bolts 19 and nuts 20 as shown and similar to those keeping the two parts of the before-mentioned box together. The advantage of having the box constituted by two halves is that it is easy to join the two halves when the heat exchanger of the cooling unit is already placed in abutment with the processing unit that is to be cooled. Thus, it is not necessary to have the complete casing joined and attached to the processing unit before installing the processing unit onto the motherboard.

The difference between the box of the before-mentioned cooling unit and the box of the alternative embodiment is determined by a difference between the processing unit and the base plate onto which the processing unit is attached. In the before-mentioned computer system, the processing unit is attached to a base plate constituted by a print circuit board and having connecting pins extending outwards from the print circuit board parallel to the print circuit board. However, in the alternative embodiment shown, the processing unit is attached to a base plate 35 having leggings 36 extending perpendicular outwards from a bottom side 37 of the base plate 35 and establishing connection between the processing unit 27, which is placed in the middle of the base plate 35, and a socket 37 on the motherboard (not shown) and thus the rest of the computer system.

The leggings 36 are intended for extending through holes 38 in the socket 37 that is to be mounted on the motherboard of the computer system, however, in such a way that the socket 37 and the base plate 35 lie parallel to the motherboard. Contrary to this, the processing unit that the before-mentioned cooling unit is intended for is being placed on a separate print circuit board mounted perpendicular to the motherboard, and not parallel with the motherboard, in a slot on the motherboard. The difficulty of the processing unit shown here in fig. 14 is that the socket 37 and the base plate 35 are parallel with the motherboard, thereby limiting the access to a top surface 39 of the base plate 35.

The socket is a standard component of the computer system. As mentioned, the socket 37 is provided with holes 38 through which the leggings 36 of the base plate 35 extend. The socket 37 itself is mounted on the motherboard (not shown). Along the circumference, the socket 37 is provided with small protrusions 40 extending outwardly from the circumference of the socket. The socket 37 is also provided with a lever arm 41 intended to be handled for securing the socket to the motherboard by appropriate securing means, after the socket has been placed on the motherboard. The socket 37 is only intended as an intermediate means between the motherboard and the base plate 35 of the processing unit in order to avoid that the base plate, having small and fragile leggings 36, have to placed directly on the motherboard.

A heating foil 42 is introduced above the base plate 35 and is intended for abutting the top surface 39 of the base plate. The heating foil 42 has a rectangular shape with a rectangular hole 43 in the middle of the heating foil. The shape is established so that the foil is abutting the top surface 39 of the base plate 35 corresponding to the position of the leggings 36 extending from the bottom side of the base plate 35. The hole in the middle allows the processing unit 27 to protrude through the heating foil 42 so that the top of the processing unit can have abutting contact established with the heat exchanger 33.

Electrical wires 44 lead to the heating foil 42 in order to heat the foil by means of electrical resistive wiring (not shown) on the heating foil. The heating foil 42 is intended for heating of the leggings 36 in order to prevent any moist condensing on the leggings because of any low temperatures originating from the cooled processing unit 27 and dissipating to the leggings. Accordingly, by heating the leggings separately from cooling the processing unit, then any dew on the leggings can be avoided, thus avoiding any unintentional short-cut between the leggings.

The heat exchanger 33 has a circular cylindrical shape. The heat exchanger 33 is surrounded by insulation 16. A spring member 45 being a spiral spring is provided above the heat exchanger 33 and is compressed between a top 46 of the heat exchanger 33 and the interior of an end 47 of the box. The spring member 45 is intended for biasing the heat exchanger 33 towards the processing unit 27. Also the spring member 45 is surrounded by insulation 48.

The box 13 is divided into two halves and the box contains the heat exchanger 33, the spring member 45 and the insulation 16,48. The box 13 is provided with a first opening (not shown) directed towards the heating foil 42, the base plate 35 and the socket 37. An orifice (not shown) of the opening is intended for abutting the heating foil 42 and via the heating foil resting against the base plate 35. The orifice has a circumference with edges 49 having a length I. The length I is approximately the same as an edge length of the heating foil 42 and the base plate 35. Thus, the box 13 does not take up more space than the base plate 35. This ensures that the box can be placed on the base plate 35 irrespective of eventual lack of space beside the base plate when the socket 37 and the base plate 35 are placed on the motherboard of the computer system.

The two halves of the box 13 are mutually joined by means of bolts 19 and nuts 20. At the end 47, the box 13 has a second opening 50 through which the pipes 34 pass to and from the heat exchanger 33. Outside the box 13, the pipes 34 are provided with insulation 4. The end 47 of the housing is provided with a first part 51 of a biasing member. The first part 51 of the biasing member has a hole 52 through which the second opening 50 of the box protrudes and the first part 51 of the biasing member is thereby fixed in relation to the box 13. Second parts 53 of the biasing member have small holes 54 intended for engagement with the small protrusions 40 on the circumference of the socket 37. The first part 51 and the second parts 53 of the biasing member are intended for being mutually joined by means of proper fastening means such as bolts 55 and nuts (not shown) at opposing ends 56,57 of the biasing members.

The biasing member 51,53 shown has the advantage that it is possible to evenly and adjustably bias the box 13 towards the socket 37 and thereby also evenly and adjustably biasing the orifice of the box towards the heating foil 42 and the base plate 35. This ensures that the heating foil 42, the base plate 37 and via the spring member 45 the top of the processing unit 27 are not damaged due to unevenly biasing of the box 13 towards the base plate 35 or due to a to a biasing with to great a force applied to the box.

Apart from the spring member 45 biasing the heat exchanger 33 towards the processing unit 27, other spring members (not shown) could be provided in connection with and along the bolts 55 and nuts of the biasing member 51,53 in such a way that the force exerted when tightening the bolts and nuts will pass through the other spring members. Thereby, the force applied when tightening the bolts 55 and nuts would not exceed the spring force of such other spring members, as long as such spring members were not fully compressed.

In a preferred embodiment of the box 13, the box is made of plastic and is provided with a metal foil or is coated with a metallic film either on an interior surface or an exterior surface of the box. Thereby, it is avoided that moisture from the ambient surroundings migrate through the box that may be permeable to moisture and into the insulation 16,48 surrounding the heat exchanger 33 and the spring member 35. Moisture in the insulation 16,48 will decrease the efficiency of the heat exchanger 33 and may damage the insulation itself. Alternatively, the box 13 may be made of a material impermeable to moisture such as metal like cast aluminium.

Fig. 14A shows a cross section of a preferred embodiment of heat exchanger to be used in a cooling unit as shown in fig. 14. The heat exchanger 33 may be made in any suitable manner, however, the preferred way of producing the heat exchanger is to sinter together small metal balls 71 and provide an outer metal shelf 72 around the sintered metal balls. A preferred metal is copper having a good thermal conductance. Spacing 73 between the metal balls 71 provides passages for the liquid refrigerant to pass through the heat exchanger, and the metal shelf 72 provides an enclosure for the liquid refrigerant. The small metal balls 71 provide easy dissipation of the cold temperature of the liquid refrigerant to the outer shelf 72 of the heat exchanger.

A central bore 74 is provided along the centre of the heat exchanger. The bottom part of the sintered metal balls 71 is configured like a cone. Via a first pipe (not shown) leading from the compressor through a condenser to the heat exchanger, the liquid refrigerant is passed through the central bore 74 forward to a bottom 75 of the heat exchanger. The liquid refrigerant is then led from the bottom 75 of the heat exchanger backwards into the passages 73 between the sintered metal balls 71.

After having passed through the passages 73, the refrigerant, via the passages, is led back to the bottom 75 and into a second pipe (not shown) configured co-axially with the first pipe and leading from the bottom of the heat exchanger to the compressor. An outer end surface 56 of the bottom 75 of the cylindrical heat exchanger is in thermal abutting contact with the processing unit 27 provided in the middle of the base plate 35 (see fig. 14).

By providing a central bore 74, it is assured that the liquid refrigerant initially is passed to the bottom 75 and thus cools down the end surface 56 of the heat exchanger, the part of the heat exchanger being in thermal contact with the processing unit. It is also assured that the refrigerant subsequently is passed through the entire heat exchanger before finally being led out of the heat exchanger. Because of the insulation 16 (see fig. 14) and because of the easy and controlled passage of the liquid refrigerant into, through and out of the heat exchanger, the cooling takes place fast and efficient. Also, the type of heat exchanger is easy and cheap to produce.

## Claims

1. A computer system comprising a cooling system, said computer system comprising at least a processing unit such as a central processing unit generating thermal energy when processing and said cooling system comprising a heat exchanger intended for being in thermal and physical contact with the processing unit, and where the heat exchanger constitutes an individual unit separate from the processing unit, and said cooling unit comprising a compressor for compressing cooling refrigerant from a vaporised state to a liquid state and comprising first pipes transporting the cooling refrigerant from the compressor to the heat exchanger and second pipes leading the cooling refrigerant from the heat exchanger back to the compressor and said computer system further comprising a regulator for at least starting and stopping the compressor and where the compressor is a low voltage compressor intended for voltages in the range from 6V to 48V, preferably is intended for voltages in the range from 6V to 12V, most preferably is intended for voltages of 12 V, and where the computer system is provided with means for regulating the cooling capacity of the compressor in response to the need for cooling, and wherein the processing unit and the heat exchanger both are enclosed in an insulation material and that the insulation material is provided between the heat exchanger and the ambient environment and also between the processing unit and the ambient environment.

2. A computer system according to claim 1, wherein the regulating means is capable of variable regulating the rotational speed and thereby the capacity of the compressor, preferably by regulating the speed infinitely, alternatively by regulating the speed stepwise.

3. A computer system according to claim 2, wherein the regulating means is regulated by a software means controlled by the computer system, alternatively that the regulating means is regulated by hardware means preferably also controlled by the computer system, alternatively controlled by components other than those of the computer system.

4. A computer system according to claim 1, where the processing unit is of a type comprising a base plate having leggings extending parallel outwards from the base member, said leggings being intended for extending through openings in a slot mounted on a motherboard of the computer system.

5. A computer system according to claim 1 wherein the processing unit and the heat exchanger both are enclosed in a box, that insulation material is provided between at least the heat exchanger and the inside of the box, preferably also between the processing unit and the inside of the box.

6. A computer system according to any of the preceding claims, wherein a heating element is in contact with the outside of the box, alternatively is in contact with the inside of the box, where the heating element consists of resistive wires, that the wires are in contact with the insulation, alternatively are in contact with the box, and that electrical power is supplied to the resistive wires for providing a heating of the wires and to the insulation, alternatively a heating of the inside or the outside of the box.

7. A computer system according to any of the preceding claims, wherein the compressor are supplied with electrical power from the built-in power supply of the computer, which power supply also is intended for powering other components of the computer, such as data-processing components.

8. A computer system according to any of the preceding claims, wherein at least the compressor, preferably at least the compressor and the condenser, is/are mounted on a frame, where the compressor and the condenser have dimensions smaller than 5 1/4 inches, where the frame has dimensions of about 5 1/4 inches and that the frame with the compressor and the condenser mounted is capable of being displaced in and out of built in drive bay shafts on the front side of a computer cabinet.

9. A computer system according to any of claims 1-7, wherein at least the compressor, preferably at least the compressor and the condenser, is/are mounted on a frame, where the compressor and the condenser have dimensions smaller than 3 1/2 inches, where the frame has dimensions of about 3 1/2 inches and that the frame with the compressor and the condenser mounted is capable of being displaced in and out of built in drive bay shafts on the front side of a computer cabinet.

10. A computer system according to any of the preceding claims, wherein at least an outer surface of the box is black and preferably is also lustreless, so that the box is capable as easy as possible to receive heat from the ambient environment.

11. A computer system according to any of the preceding claims, wherein the box on an inner surface, alternatively on an outside surface, of the box is provided with a moisture impermeable coating, preferably a metallic coating such as a metallic foil or a metallic film, so that insulation inside the box is prevented from absorbing moisture.

## Patentansprüche

1. Computersystem, umfassend ein Kühlsystem, wobei das Computersystem mindestens eine bei der Verarbeitung Wärmeenergie erzeugende Verarbeitungseinheit umfasst und das Kühlsystem einen Wärmetauscher umfasst, der für den thermischen und direkten Kontakt mit der Verarbeitungseinheit vorgesehen ist, und wobei der Wärmetauscher eine eigenständige Einheit darstellt, die von der Verarbeitungseinheit getrennt ist, und wobei die Kühleinheit einen Verdichter zum Verdichten der Kühlflüssigkeit aus einem verdampften Zustand in einen flüssigen Zustand umfasst und wobei sie erste Leitungen zur Förderung der Kühlflüssigkeit von dem Verdichter zu dem Wärmetauscher und zweite Leitungen, die die Kühlflüssigkeit vom Wärmetauscher zurück zum Verdichter führen, umfasst, und wobei das Computersystem weiterhin einen Regler zum zumindest Anlassen und Abschalten des Verdichters umfasst und wobei der Verdichter ein Niederspannungsverdichter ist, der für Spannungen im Bereich von 6 V bis 48 V vorgesehen ist, vorzugsweise für Spannungen im Bereich von 6 V bis 12 V vorgesehen ist, am meisten bevorzugt für Spannungen von 12 V vorgesehen ist, und wobei das Computersystem mit Mitteln zum Regeln der Kühlkapazität des Verdichters als Reaktion auf den Kühlbedarf versehen ist und wobei die Verarbeitungseinheit und der Wärmetauscher beide von einem Dämmmaterial umgeben sind und wobei das Dämmmaterial zwischen dem Wärmetauscher und der Umgebung bereitgestellt ist und auch zwischen der Verarbeitungseinheit und der Umgebung.

2. Computersystem nach Anspruch 1, wobei das Regulierungsmittel in der Lage ist, die Drehzahl und **dadurch** die Kapazität des Verdichters variabel zu regeln, vorzugsweise durch stufenlose Regelung der Drehzahl, alternativ durch Regelung der Drehzahl in Stufen.

3. Computersystem nach Anspruch 2, wobei das Regulierungsmittel über ein Softwaremittel geregelt ist, das von dem Computersystem gesteuert wird, wobei das Regulierungsmittel alternativ über ein Hardwaremittel geregelt ist, das vorzugsweise ebenfalls von dem Computersystem gesteuert ist, alternativ dass es von anderen Komponenten als dem Computersystem gesteuert ist.

4. Computersystem nach Anspruch 1, wobei die Verarbeitungseinheit von der Art ist, die eine Grundplatte mit Beinchen umfasst, welche sich parallel von der Grundplatte nach außen erstrecken, wobei die Beinchen dazu vorgesehen sind, sich durch Öffnungen in einem Steckplatz zu erstrecken, der auf einem Motherboard des Computersystems angebracht ist.

5. Computersystem nach Anspruch 1, wobei die Verarbeitungseinheit und der Wärmetauscher beide von einem Gehäuse umhüllt sind, wobei das Dämmmaterial zwischen mindestens dem Wärmetauscher und der Innenseite des Gehäuses bereitgestellt ist, vorzugsweise auch zwischen der Verarbeitungseinheit und der Innenseite des Gehäuses.

6. Computersystem nach einem der vorhergehenden Ansprüche, wobei ein Heizelement in Kontakt mit der Außenseite des Gehäuses ist, alternativ in Kontakt mit der Innenseite des Gehäuses, wobei das Heizelement aus Widerstandsdrähten besteht, wobei die Widerstandsdrähte in Kontakt mit der Dämmung sind, alternativ in Kontakt mit dem Gehäuse, und wobei die Widerstandsdrähte mit elektrischem Strom versorgt werden, um ein Erwärmen der Drähte und der Dämmung, alternativ eine Erwärmung der Innenseite oder der Außenseite des Gehäuses, zu verursachen.

7. Computersystem nach einem der vorhergehenden Ansprüche, wobei der Verdichter von dem eingebauten Netzteil des Computers mit elektrischem Strom versorgt wird, wobei das Netzteil auch zur Versorgung anderer Komponenten des Computers, wie Datenverarbeitungskomponenten, vorgesehen ist.

8. Computer nach einem der vorhergehenden Ansprüche, wobei mindestens der Verdichter, vorzugsweise mindestens der Verdichter und der Kondensator, an einem Rahmen angebracht ist/sind, wobei der Verdichter und der Kondensator Abmessungen aufweisen, die kleiner sind als 5 1/4 Zoll, wobei der Rahmen Abmessungen von etwa 5 1/4 Zoll aufweist und wobei der Rahmen mit dem angebrachten Verdichter und Kondensator auf eingebaute Wellen von Laufwerksschächten an der Vorderseite eines Computergehäuses aufgesetzt und wieder abgenommen werden kann.

9. Computer nach einem der Ansprüche 1-7, wobei mindestens der Verdichter, vorzugsweise mindestens der Verdichter und der Kondensator, an einem Rahmen angebracht ist/sind, wobei der Verdichter und der Kondensator Abmessungen aufweisen, die kleiner sind als 3 1/2 Zoll, wobei der Rahmen Abmessungen von etwa 3 1/2 Zoll aufweist und wobei der Rahmen mit dem angebrachten Verdichter und Kondensator auf eingebaute Wellen von Laufwerksschächten an der Vorderseite eines Computergehäuses aufgesetzt und wieder abgenommen werden kann.

10. Computersystem nach einem der vorhergehenden Ansprüche, wobei mindestens eine Außenfläche des Gehäuses schwarz und vorzugsweise glanzlos ist, sodass das Gehäuse in der Lage ist, so einfach wie möglich Wärme aus der Umgebung zu erhalten.

11. Computersystem nach einem der vorhergehenden Ansprüche, wobei das Gehäuse an einer Innenfläche, alternativ an eine Außenfläche, des Gehäuses mit einer feuchtigkeitsundurchlässigen Beschichtung, vorzugsweise einer metallischen Beschichtung, wie einer Metallfolie oder einer Metallschicht, versehen ist, sodass die Dämmung im Inneren des Gehäuses keine Feuchtigkeit absorbieren kann.

## Revendications

1. Système informatique comprenant un système de refroidissement, ledit système informatique comprenant au moins un processeur, tel qu'un processeur générant de l'énergie thermique pendant le traitement et ledit système de refroidissement comprenant un échangeur thermique destiné à être en contact thermique et physique avec le processeur, et l'échangeur thermique constituant une unité individuelle distincte du processeur, ladite unité de refroidissement comprenant un compresseur destiné à comprimer un produit réfrigérant de refroidissement d'un état vaporisé à un état liquide et comprenant des premiers tuyaux transportant le produit réfrigérant de refroidissement du compresseur à l'échangeur thermique et des seconds tuyaux conduisant le produit réfrigérant de refroidissement de l'échangeur thermique vers le compresseur et ledit système informatique comprenant également un régulateur destiné au moins à démarrer et interrompre le compresseur et le compresseur étant à basse tension, conçu pour des tensions de 6 à 48 V, de préférence pour des tensions de 6 à 12 V, voire de 12 V, et le système informatique étant équipé de moyens de régulation de la capacité de refroidissement du compresseur en réponse au besoin de refroidissement, et le processeur et l'échangeur thermique étant tous deux abrités dans un matériau isolant, lequel est disposé entre l'échangeur thermique et l'air environnant, ainsi qu'entre le processeur et l'air environnant.

2. Système informatique selon la revendication 1, les moyens de régulation étant en mesure de réguler de manière variable la vitesse de rotation et ainsi la capacité du compresseur, de préférence par une régulation de la vitesse à l'infini, ou alternativement par une régulation de la vitesse par étapes.

3. Système informatique selon la revendication 2, les moyens de régulation étant régulés par un logiciel commandé par le système informatique, ou alternativement les moyens de régulation étant régulés par du matériel, de préférence également commandé par le système informatique, ou alternativement commandé par des composants autres que ceux du système informatique.

4. Système informatique selon la revendication 1, le processeur comprenant une plaque de base munie de pieds dont le prolongement est parallèle et s'étend à l'extérieur du membre de base, lesdits pieds étant prévus pour passer par des ouvertures dans un logement placé sur une carte-mère du système informatique.

5. Système informatique selon la revendication 1, le processeur et l'échangeur thermique étant tous deux abrités dans un boîtier, le matériau isolant étant disposé au moins entre l'échangeur thermique et l'intérieur du boîtier, de préférence également entre le processeur et l'intérieur du boîtier.

6. Système informatique selon l'une des revendications précédentes, un élément chauffant étant en contact avec l'extérieur du boîtier, ou alternativement en contact avec l'intérieur du boîtier, l'élément chauffant comprenant des fils résistifs, les fils étant en contact avec l'isolation, ou alternativement avec le boîtier, et le courant électrique étant appliqué aux fils résistifs afin de chauffer ces derniers et l'isolation, ou alternativement afin de chauffer l'intérieur ou l'extérieur du boîtier.

7. Système informatique selon l'une des revendications précédentes, le compresseur étant alimenté en courant électrique par le bloc d'alimentation intégré de l'ordinateur, lequel bloc d'alimentation étant également destiné à alimenter d'autres composants de l'ordinateur, tels que les composants de traitement des données.

8. Système informatique selon l'une des revendications précédentes, au moins le compresseur, de préférence au moins le compresseur et le condensateur, étant monté(s) sur un cadre, les dimensions du compresseur et du condensateur étant inférieures à 5 pouces ¼, les dimensions du cadre étant d'environ 5 pouces ¼ et le cadre sur lequel sont montés le compresseur et le condensateur pouvant être déplacé à l'intérieur et à l'extérieur de gaines de baies intégrées, sur le devant d'un boîtier d'ordinateur.

9. Système informatique selon l'une des revendications 1 à 7, au moins le compresseur, de préférence au moins le compresseur et le condensateur, étant monté(s) sur un cadre, les dimensions du compresseur et du condensateur étant inférieures à 3 pouces ½, les dimensions du cadre étant d'environ 3 pouces ½ et le cadre sur lequel sont montés le compresseur et le condensateur pouvant être déplacé à l'intérieur et à l'extérieur de gaines de baies intégrées, sur le devant d'un boîtier d'ordinateur.

10. Système informatique selon l'une des revendications précédentes, au moins une surface extérieure du boîtier étant noire et de préférence également mate, de sorte que le boîtier puisse recevoir la chaleur environnante aussi facilement que possible.

11. Système informatique selon l'une des revendications précédentes, le boîtier étant doté sur une surface intérieure, ou alternativement sur une surface extérieure, d'un revêtement imperméable à l'humidité, de préférence un revêtement métallique tel qu'une feuille de métal ou un film métallique, de sorte que l'isolation à l'intérieur du boîtier ne risque pas de prendre l'humidité.
